# EUROPEAN PATENT APPLICATION

(11) **EP 3 981 732 A1**
(43) Date of publication of application: **13.04.2022**
(21) Application number: 21200889.0
(22) Date of filing: 05.10.2021
(51) Int. Cl.: B66F 9/24, B66F 9/20, B66F 9/075, G06F 3/048

(54) **INDUSTRIAL TRUCK WITH IMPROVED DISPLAY FUNCTION**

(30) Priority: 09.10.2020 IT 202000023812
(71) Applicant: TOYOTA MATERIAL HANDLING MANUFACTURING ITALY S.p.A, 40132 Bologna (IT)
(72) Inventor: Bonsignori, Andrea, 40132 Bologna (IT); Hoeser, Dragana, 40132 Bologna (IT); Iozzi, Daniele, 40132 Bologna (IT)
(74) Representative: Hoffmann Eitle

(57) **Abstract**

An industrial truck (10) includes:

-a chassis (11),

-a mast (12) pivotally mounted on the chassis,

-a lifting element (13) for lifting a load (14), the lifting element being mounted on the mast in a slidable manner along the mast,

-a display (17),

-a controller (40) configured to generate a plurality of pieces of control information of different types, and to control the display to display one or more of the generated pieces of control information,

wherein the plurality of pieces of control information includes at least:

-material handling information (21, 22, 31, 32, 34, 35) relating to the handling of the load by the lifting element including one or more among a height of the lifting element (22), a load weight on the lifting element (21, 31), and a mast tilt angle (21, 32),

-movement information (19, 20, 26, 33, 36) relating to the movement of the industrial truck including one or more among the speed of the industrial truck (19), an indication of the trajectory of the industrial truck (20), and the driving direction (20), wherein the controller is configured to control the display to vary a display area of at least one of the material handling information and the movement information based on a current status of the industrial truck,

wherein the controller (40) is configured to control the display (17) to display simultaneously the material handling information (21, 22) and the movement information (19, 20) before and after varying the display area of one of the material handling information and the movement information based on the current status of the industrial truck.

## Description

### TECHNICAL FIELD OF THE INVENTION

The field of the present invention concerns an industrial truck, such as a forklift truck, with an improved display function.

### BACKGROUND OF THE INVENTION

Forklift trucks including a chassis, a mast pivotally mounted on the chassis and a fork slidably mounted on the mast are known in the art. The fork is used to lift a load, for example for transporting ware in a store. The mast can be tilted with respect to the chassis to facilitate loading and unloading of the ware.

It is also known to provide the forklift truck with one or more displays for showing control information relating to the operation of the truck. The display may typically display several different types of control information relating to the operation of the truck, including e.g. truck speed, information relating to the position of the fork, the load weight on the fork, and the like. The displayed information can be viewed by the user during operation of the forklift truck in order to ease the driving and the material handling. The control information may also improve safety of the operation, as the user may become aware of hazardous situations by viewing the displayed content.

Due to the large number of different types of information to be displayed by the one or more displays, when using a conventional industrial truck it resulted difficult for the user to identify the information which are relevant to the operation of the truck at a certain point in time. In fact, different kinds of information can be usually displayed simultaneously on the display and the user might not be capable to quickly recognize the useful information under the current circumstances. This may lead to a delayed and inefficient operation of the industrial truck by the user or, in the worst case, to dangerous situations due to the fact that the user's attention is focused on the display while attempting to read the relevant information for a relatively long time. Thus, conventional displays were not satisfactorily contributing to the driver's safety and work efficiency.

### SUMMARY OF THE INVENTION

In view of the above problems, it is a general object of the present invention to improve the display function of the display of an industrial truck. More specifically, it is an object of the invention to provide a display function that enables the user to easily identify the relevant information under the current circumstances of operation of the truck. A further object of the invention is to provide an industrial truck whose display function enables the user to identify the relevant information under the current circumstances of operation in a short time. A further object of the invention is to provide a display function of the industrial truck which enables the user to properly recognize the relevant information under a wide range of circumstances while minimizing the size of the display, in other words without requiring a large display or more than one display.

In view of the above object, the present invention proposes an industrial truck including:
- a chassis,
- a mast pivotally mounted on the chassis,
- a lifting element for lifting a load, the lifting element being mounted on the mast in a slidable manner along the mast,
- a display,
- a controller configured to generate a plurality of pieces of control information of different types, and to control the display to display one or more of the generated pieces of control information,
wherein the plurality of pieces of control information includes at least:
- material handling information relating to the handling of the load by the lifting element, and
- movement information relating to the movement of the industrial truck,
characterized in that the controller is configured to control the display to vary a display area of at least one of the pieces of control information based on a current status of the industrial truck.

Since the display area dedicated to a certain type of the control information is varied according to a current status of the truck, the display can convey different information in a different manner depending on the operational circumstances of the machine. For example, when material is being handled by the lifting element, material handling information relating to the handling of the load by the lifting element can be displayed with an enlarged display area compared to the case in which the lifting element is not moved and the industrial truck is translating. This permits the user to easily recognize the relevant information under different circumstances of operation, thereby reducing the time the user spends watching the display. This prevents dangerous situations in which the user is distracted and delays in the operation of the truck. Thus, a higher level of safety and an improved efficiency is achieved.

In a further embodiment, the controller is configured to control the display to display simultaneously the material handling information and the movement information before and after varying the display area of one of the pieces of control information based on the current status of the industrial truck. Thus, even if the user can quickly and easily recognize the most relevant information under different circumstances of operation, the user can still maintain an overview also on less relevant information, since different types of information are multiplexed on the display under plural truck statuses. This improves the display function because, for example, the user does not need to input any additional command to the control unit to view the less relevant information.

Preferably, the material handling information displayed before varying the display area of the material handling information is the same as the material handling information displayed after varying the display area of the material handling information; the movement information displayed before varying the display area of the movement information is the same as the movement information displayed after varying the display area of the movement information. In other words, the same information is conveyed to the user before and after varying the related display area, whereas the information occupies more or less area on the display upon varying the display area based on the current status of the truck. In a further embodiment, when the controller controls the display to enlarge the display area of a first piece of control information, the controller is configured to control the display to decrease a display area of a second piece of control information different from the first piece of control information. Thus, the display can display different types of control information simultaneously on a limited available display area. This improves the display function of the industrial truck while maintaining a reasonably limited size of the display.

In a further embodiment, the controller is configured to vary the display area of the at least one piece of control information from a first display area to a second display area, wherein both the first and the second display areas are visible by a user of the industrial truck. Thus, the display can display the different types of information before and after varying the display area of a certain piece of control information. This permits to provide the user with a complete overview of different type of information under different circumstances of operation. Thus, the display function is further improved.

In a further embodiment, the material handling information includes one or more among: a height of the lifting element, a load weight on the lifting element, and a mast tilt angle. This permits the user to recognize the most relevant operational parameter in case material is being handled by means of the lifting element.

In a further embodiment, the movement information includes one or more among the speed of the industrial truck, an indication of the trajectory of the industrial truck, and the driving direction. This permits the user to recognize the most relevant operational parameter in case the industrial truck is being driven.

In a further embodiment, the controller is configured to increase a display area of the material handling information when the industrial truck is handling a load by means of the lifting element. This makes it easier for the user to correctly impart commands to the industrial truck while handling material, since the relevant material handling information are timely displayed in an enlarged fashion on the display and are easily recognizable by the user.

In a further embodiment, the controller is configured to increase a display area of the movement information when the industrial truck is moving at a speed above a predetermined threshold. This makes it easier for the user to correctly impart commands to the industrial truck while driving, since the relevant movement information are timely displayed in an enlarged fashion on the display and are easily recognizable by the user.

In a further embodiment, the plurality of pieces of control information further includes one or more of the following: battery state information indicating a state of charge of a battery of the industrial truck or the residual operating time of the industrial truck, anti-collision information, and a video captured by one or more video cameras of the industrial truck. This allows the user to properly operate the industrial truck under a large variety of circumstances.

In a further embodiment, the controller is configured to increase a display area of battery state information when the industrial truck is turned off. This allows the user to quickly recognize whether the industrial truck is properly charged in view of a planned working session, before initiating the operation.

In a further embodiment, the controller is configured to increase a display area of the anti-collision information when the controller detects a risk of collision. This allows the user to quickly and more safely recognize a potential dangerous situation (such as an obstacle on the driving trajectory) while driving the industrial truck. Thus, the improved display function achieves an improved safety as well.

In a further embodiment, the controller is configured to increase a display area of a video captured by the one or more video camera when the industrial truck is driving backwards or in an environment with limited visibility. This allows the user to quickly and more safely recognize an obstacle while driving the industrial truck under specific difficult circumstances. Thus, the improved display function further achieves an improved safety.

In a further embodiment, the controller is configured to control the display to display simultaneously all pieces of control information before and after varying the display area of at least one of the pieces of control information based on the status of the industrial truck. This permits to multiplex many different pieces of information of different types simultaneously on the display, thereby providing a satisfactory overview of the available control information to the user.

In a further embodiment, an industrial truck includes:
- a chassis,
- a mast pivotally mounted on the chassis,
- a lifting element for lifting a load, the lifting element being mounted on the mast in a slidable manner along the mast,
- a display,
- a controller configured to generate a plurality of pieces of control information of different types, and to control the display to display one or more of the generated pieces of control information,
wherein the plurality of pieces of control information includes at least:
- material handling information relating to the handling of the load by the lifting element including one or more among a height of the lifting element, a load weight on the lifting element, and a mast tilt angle,
- movement information relating to the movement of the industrial truck including one or more among the speed of the industrial truck, an indication of the trajectory of the industrial truck, and the driving direction,
wherein the controller is configured to control the display to vary a display area of at least one of the material handling information and the movement information based on a current status of the industrial truck,
wherein the controller is configured to control the display to display simultaneously the material handling information and the movement information before and after varying the display area of one of the material handling information and the movement information based on the current status of the industrial truck.

### BRIEF DESCRIPTION OF THE DRAWINGS

The above and other advantages of the present invention will be illustrated with reference to an example embodiment of the invention, described with reference to the appended drawings listed as follows.
Fig. 1 shows a lateral view of an industrial truck according to an embodiment of the invention;
Fig. 2 shows an embodiment of the armrest of the industrial truck on which the display is mounted;
Fig. 3 shows the overall display area of the display according to an embodiment of the invention;
Figs. 4-8 shows transitions of the contents displayed by the display under different circumstances of operation of the industrial truck;
Fig. 9(a) and 9(b) shows the different display areas dedicated to different types of control information under different circumstances of operation of the industrial truck;
Fig. 10 shows an embodiment of the hardware implementation of the control unit of the industrial truck.

### DETAILED DESCRIPTION OF THE PREFERRED EMBODIMENTS

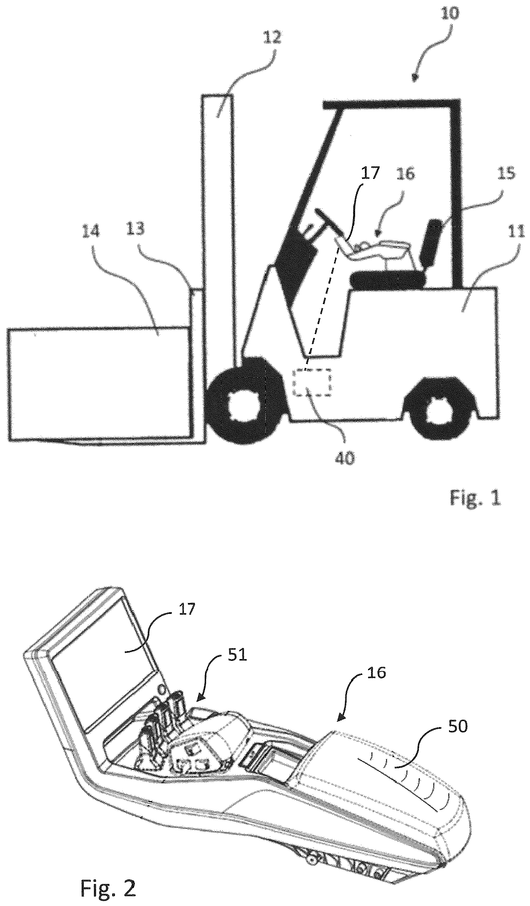

Figure 1 shows an industrial truck 10 according to an embodiment of the present invention, e.g. a forklift truck. The industrial truck 10 includes a chassis 11, a mast 12 pivotally mounted on the chassis 11 and lifting element 13 (e.g. a fork) for lifting a load 14; the lifting element 13 is mounted on the mast 12 in a slidable manner along the mast 12; in figure 1 the lifting element 13 is shown in a lowered position. The mast 12 is pivotally mounted on the chassis 11 around a pivot, which is preferably located close to the front axle of the truck 10. The mast 12 may be tilted over a range of directions encompassing a vertical direction. The industrial truck 10 may be electrically driven or may include an endothermic motor, or may have a hybrid drive system. Further, the industrial truck 10 might include four wheels or three wheels disposed on a front axle and a rear axle, as well as a steering wheel for steering the truck while driving.

The truck 10 includes a lifting actuator configured to move the lifting element 13 along the mast 12 and a tilting actuator configured to tilt the mast 12 with respect to the chassis 11 around a horizontal axis. The truck further includes a control unit 40 (schematically represented in dashed lines in fig. 1) configured to control the lifting actuator and the tilting actuator. In the present disclosure, the control unit 40 can be also referred to as controller 40. The control unit 40 may control also further actuators of the truck, i.e. a wheel drive system. The wheel drive system can be implemented according to any know art. In particular, the wheel drive system may include one or more motors for driving the wheels of the truck and a braking system. In addition, the control unit 40 may be preferably configured to output a warning signal and/or an indication of a control value (such as an allowed operational range of the truck identified by a maximum allowed lifting height, a maximum allowed forward tilt angle and the like) to an output interface including e.g. a speaker and/or a display.

The industrial truck comprises a user seat 15 and an armrest 16 on a side of the user seat, preferably on the right side of the user seat 15. In use, the armrest 16 is mounted on industrial truck 10 in a fixed manner with respect to the frame 11. More specifically, in one embodiment, the armrest 16 is connected to the seat 15.

As shown in figure 2, the armrest 16 includes an arm resting element 50 and input means 51 for inputting commands to the industrial truck, e.g. for moving the lifting element. A display 17 is preferably mounted on the end of the armrest 16, opposite to the arm resting element 50 and close to the inputting means 51. However, the position of the display 17 could also be different, e.g. the display could be positioned close to the steering wheel of the industrial truck or at any other suitable position to be viewed by the user of the industrial truck.

According to an embodiment of the invention, the controller 40 is configured to generate a plurality of pieces of control information of different types, and to control the display 17 to display one or more of the generated pieces of control information. In the present disclosure, the term "piece of control information" is to be considered interchangeable with "control information", "control data", "item of control information" or the like. For controlling the display 17, the controller 40 is suitably connected to the display 17 through any known communication connection, which is schematically represented with a dashed line in figure 1. The connection between the controller 40 and the display 17 may e.g. be a wired or wireless connection and may implement any known communication protocol. The controller 40 transmits a display signal to the display 17 through the connection to cause (or control) the display 17 to display a desired content including e.g. different types of control information relating to the operation of the industrial truck 10.

The plurality of pieces of control information displayed by the display 17 includes at least: material handling information relating to the handling of the load by the lifting element, and movement information relating to the movement of the industrial truck.

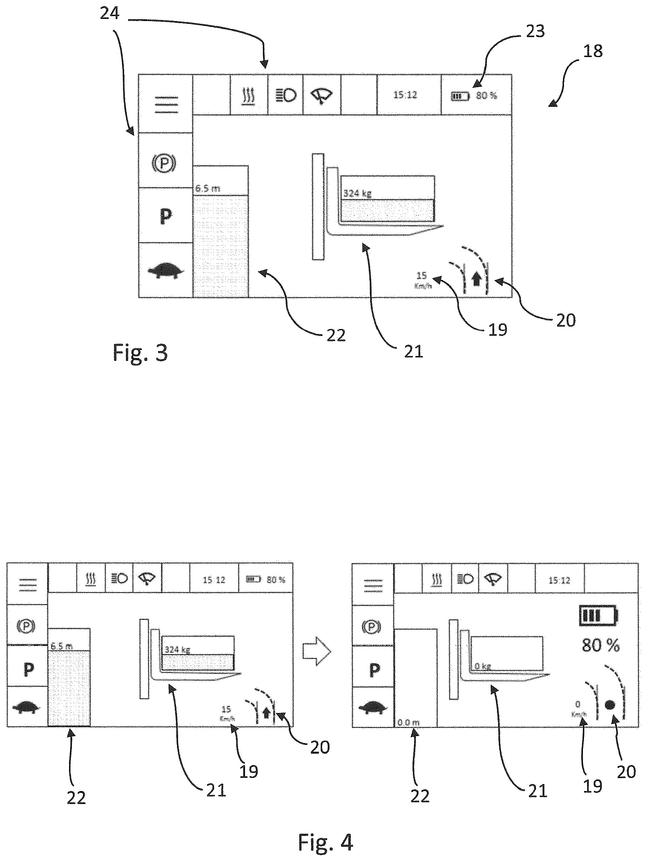

For example, as shown in detail at figures 3-9 and further discussed later, the material handling information may include one or more among: a height of the lifting element 22, a load weight on the lifting element 21, 31, and a mast tilt angle 21, 32. Preferably, the material handling information includes all of the height of the lifting element 22, the load weight on the lifting element 21, 31, and the mast tilt angle 21, 32. However, the present invention is not limited to these examples and also other material handling information could be displayed by the display 17 under the control of the controller 40.

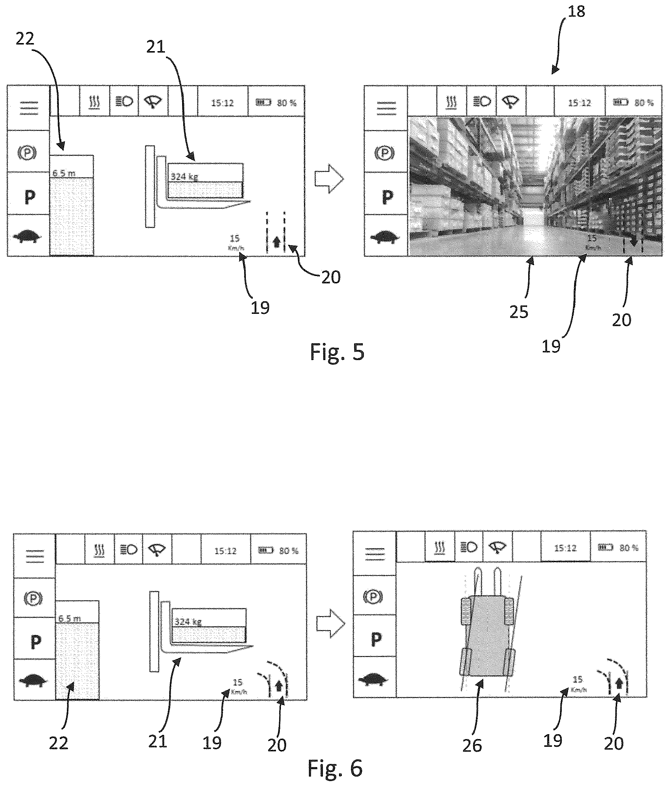

As also shown in detail at figures 3-9 and further described later on, the movement information may include e.g. one or more among: the speed of the industrial truck 19, an indication of the trajectory of the industrial truck 20 (e.g. turning left or turning right), and the driving direction 20 (e.g. forward or backward). Preferably, the movement information includes all of the speed of the industrial truck 19, the indication of the trajectory of the industrial truck 20, and the driving direction 20. The movement information may also include the inclination of the wheels 26 with respect to the frame 11 of the industrial truck 10 (e.g. showing the angle between the steered wheels and the longitudinal direction of the industrial truck), as shown in figure 6. However, the present invention is not limited to these examples and also other movement information could be displayed by the display 17 under the control of the controller 40.

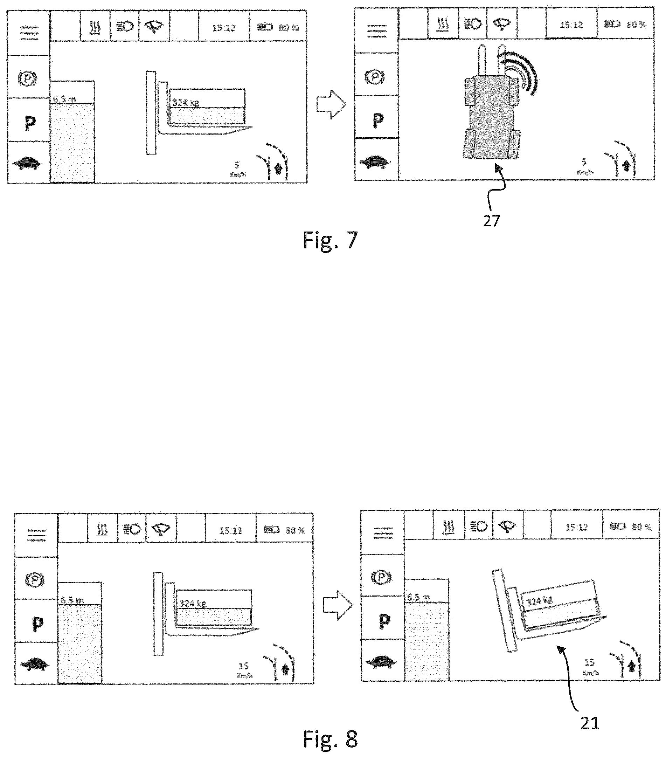

As above explained, according to a preferred embodiment of the invention, the controller 40 controls the display 17 to display different types of pieces of control information including material handling information and movement information. However, also other types of control information can be displayed by the display 17 under the control of the controller 40. For example, the plurality of pieces of control information displayable by the display 17 under the control of the controller 40 may further include one or more of the following:
- battery state information 23 indicating a state of charge of a battery of the industrial truck (see figs. 3 and 4);
- anti-collision information 27 (see fig. 7),
- a video 25 captured by one or more video cameras of the industrial truck (see figure 5).

In other words, battery state information, anti-collision information and a video are different types of control information that can be displayed by the display 17 under the scope of the present invention.

In the example of figure 3, the overall display area 18 of the display 17 is shown. In this case, as material handling information, the display 17 displays the height of the lifting element 22, and the load weight on the lifting element 21. Furthermore, as the mast is shown in the vertical direction, also the mast tilt angle is displayed as material handling information. As movement information, the display 17 displays the speed of the industrial truck 19, the driving direction 20 (by means of the upward arrow) and the indication of the trajectory of the industrial truck 20 (by means of the dashed lines curved to the left). The display 17 may also display additional information, such as the battery status information 23 on the upper right corner. Further additional information may be displayed on the upper and left edges of the display area 18, including e.g. information on the lighting, handbrake, windscreen wipers, driving mode selection and so on.

According to the invention, the controller 40 is configured to control the display 17 to vary a display area of at least one of the pieces of control information based on a current status of the industrial truck. In the present disclosure, the expression "current status" is interchangeable with "operational circumstance" or "circumstance of operation". For example, a current status of the industrial truck may be that the industrial truck is handling material by means of the lifting element, i.e. the lifting element is being moved to handle a load or the lifting element is picking up a load by increasing a lifting force exerted on the load. Another current status of the industrial truck may be that the industrial truck is moving, i.e. is translating or being driven with a speed above a predetermined threshold. The threshold may be a threshold larger than zero, e.g. the threshold may be in the range 5-10 km/h. Another possible current status of the industrial truck may be that the industrial truck is driving backwards or that the industrial truck is being driven in an environment with limited visibility. Also other possible statuses or operational circumstances of the industrial truck can be conceived by the skilled person and will be described later on.

The controller 40 may detect or determine the current status of the industrial truck based on inputs originating from one or more sensors (not illustrated) of the industrial truck 10. The term "detect" in the present disclosure is interchangeable with the term "identify", "recognize" or the like. The term "input" in the present disclosure is interchangeable with "input signal", "input data" or the like. For example, the controller 40 may receive inputs from one or more of the following sensors: a load sensor for detecting the load weight on the lifting element, a tilt angle sensor for detecting the tilt angle of the mast with respect to the chassis, a height sensor for detecting the height of the lifting element with respect to the mast, a truck speed sensor, and a truck steering angle sensor. Also other sensors could be mounted on the industrial truck to provide an input signal to the controller 40. The industrial truck may be equipped with one or more video cameras or vicinity sensors, e.g. mounted on the lifting element, on the rear part of the industrial truck or the like. The video provided by the video camera to the controller 40 or the input signal generated by a vicinity sensor may also be used by the controller 40 to identify the current status of the industrial truck, e.g. a status in which there is a collision risk.

In a preferred embodiment, the controller 40 is configured to detect the current status of the industrial truck periodically during operation and to vary the display area of at least one piece of control information when a change in the current status is determined. For example, the interval for detecting the current status by the controller 40 may be in the range 0,1 - 3 seconds. This ensures that the most relevant information is always displayed timely to the user in the proper manner with varied displayed area. More generally, the current status may be detected periodically with a period of less than 3 seconds.

According to a preferred embodiment, the controller 40 is configured to increase a display area of the material handling information when the industrial truck is handling a load by means of the lifting element (the term "load" may be interchangeable with the term "material" in the present disclosure). An example of this embodiment is shown with reference to the left part of figure 4, in which the material handling information 21 and 22 occupies most of the area of the overall display area 18. Thanks to this arrangement, the user can quickly identify the relevant information relating to the material handling when he/she is actuating the lifting element 13 to move the load 14. Thus, an improved display function is achieved.

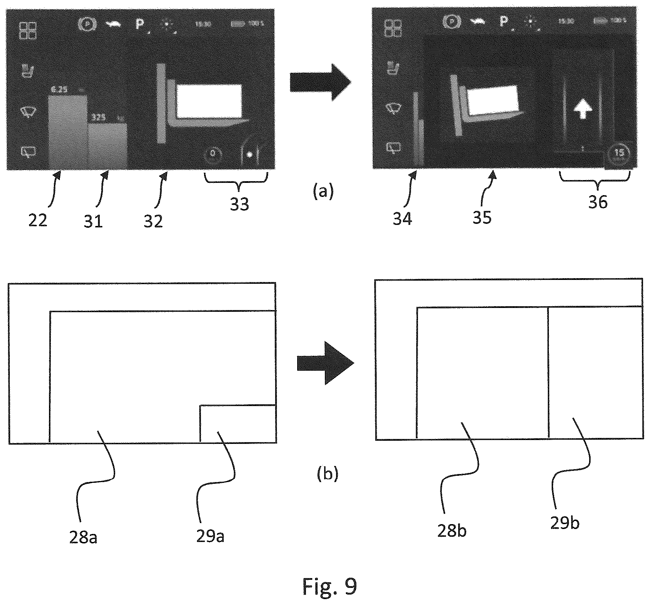

According to a further preferred embodiment, the controller 40 is configured to increase a display area of the movement information when the industrial truck is moving at a speed above a predetermined threshold (e.g. a speed in the range 5-10 km/h). An example of this embodiment is shown at figures 9(a) and (b) on the right side, where the movement information 36 occupies an increased area 29b compared to the area 29a occupied by the movement information 33 on the left side of the figure. This allows the user to easily identify the relevant information, such as truck speed, direction of movement and trajectory of the truck, when the industrial truck is translating. Thus, an improved display function is achieved.

According to a preferred embodiment, the controller 40 is configured to increase a display area of battery state information 23 when the industrial truck is turned off. An example of this embodiment is shown at figure 4 showing the transition of the overall display area 18 from the situation in which material is being handled (see the left side of the figure 4) to the situation in which the industrial truck is turned off (see the right side of figure 4). Specifically, as visible on the right side of figure 4, the battery state information 23 is shown on an enlarged display area compared to the status of the industrial truck in which material is being handled. This allows the user to easily ascertain the level of charge of a battery-powered industrial truck before turning on the industrial truck. Accordingly, the display area dedicated to the material handling information 21, 22 is reduced when the industrial truck is turned off (see left side of figure 4).

According to a further preferred embodiment, the controller 40 is configured to increase the display area of information 26 relating to the inclination of steered wheels of the industrial truck (see fig. 6) when the industrial truck is moving at a speed below a predetermined threshold. In a preferred embodiment, the predetermined threshold is in the range 10-20 km/h. When driving at low velocities, in fact, wheel orientation becomes important since the driver is driving in narrow spaces and would like to avoid collision. Thus, improved safety is achieved.

According to a further preferred embodiment, the controller 40 is configured to increase a display area of a video 25 captured by the one or more video camera when the industrial truck is driving backwards or in an environment with limited visibility. An example of this embodiment is shown at figure 5. Specifically, in this example, the display area of the video 25 is increased from zero (see the left part of figure 5) to most of the overall display area 18 of the display 17 (see the right part of figure 5). Along with the video 25, also movement information 19, 20 may be displayed as overlay. According to this embodiment, safety can be improved, because the user can easily detect dangerous situations or obstacles in case of difficult driving conditions.

According to a further preferred embodiment, the controller 40 is configured to increase a display area of the anti-collision information 27 when the controller detects a risk of collision. An example of this embodiment is shown in figure 7. In this example, the transition is shown from the status of material handling (on the left side of figure 7) to the status in which a risk of collision is present (on the right side of figure 7). The controller may increase the display area of the anti-collision information 27 when the controller detects a risk of collision based on input signals from one or more video cameras if the industrial truck or other vicinity sensors.

In figure 8 a transition is shown from the status of material handling with the mast in a vertical direction (see the left side of the figure 8) to the status of material handling with the mast tilted backward (see the right side of the figure 8). In this case the piece of control information 21 corresponds simultaneously to the weight on the lifting element and to the mast tilt angle, as the same graphical element represents both pieces of control information.

According to a preferred embodiment, the controller 40 is configured to control the display 17 to display simultaneously the material handling information 21, 22 and the movement information 19, 20 before and after varying the display area of one of the pieces of control information based on the current status of the industrial truck. An example of this embodiment is shown in figures 4 and 9. This arrangement permits to multiplex on the display 17 the material handling information and the movement information under different operation circumstances (or statuses), thereby providing an overview of different types of control information to the user. This improves the display function of the industrial truck.

Figure 9(a) and 9(b) refers to the case of transition from the status in which the material is being handled (see the left side of the figures) to the status in which the industrial truck is moving, i.e. is translating or being driven (see the right side of the figures). In figure 9(a) two actual implementations of the display areas 18 of the display 17 are shown. In figure 9(b) the display areas 28a, 29a, 28b and 29b of the two types of control information (the material handling information and movement information) are schematically shown, referring to the case of figure 9(a).

As shown by the example of figures 9(a) and 9(b), according to a further preferred embodiment, when the controller controls the display to enlarge the display area 29b of a first piece of control information (e.g. the movement information), the controller is configured to control the display to decrease a display area 28b of a second piece of control information (e.g. the material handling information) different from the first piece of control information. Specifically, in case the material is being handled on the left side of the figures 9(a) and 9(b), the material handling information 22, 31, 32 occupies an enlarged display area 28a, while the movement information 33 occupies a reduced display area 29a. On the right side of the figures 9(a) and 9(b), in case the industrial truck is moving, the material handling information 34-35 has a reduced display area 28b, while the movement information 36 has an enlarged display area 29b. This functionality allows the user to easily detect the relevant information under different current statuses of the industrial truck, while the size of the display 17 can be kept relatively small. This improves the display function of the industrial truck.

In the example of figure 9(a), the weight on the lifting element 31 is displayed separately from the mast tilt angle 32. In case the material handling information is less relevant and displayed with a reduced display area as shown on the right side of figure 9, the weight on the lifting element 34 is shown jointly with height of the lifting element and separately from the mast tilt angle 35.

According to a further embodiment, the controller 40 is configured to vary the display area of the at least one piece of control information from a first display area 28a to a second display area 28b, wherein both the first and the second display areas are visible by a user of the industrial truck. This allows the user to maintain an overview also of the less relevant information under different operational circumstances, thereby improving the display function of the industrial truck.

According to a further preferred embodiment, the controller 40 is configured to control the display to display simultaneously all pieces of control information before and after varying the display area of at least one of the pieces of control information based on the current status of the industrial truck. In other words, all different kinds of control information may be displayed simultaneously by the display 17 under the control of the controller 40. Alternatively, any combination of two or three types of the above discussed control information may be displayed simultaneously. This improves the overview over a variety of different types of control information provided to the user, thereby improving the display function of the industrial truck.

It should be noted that all above functionalities, transitions and features of the display function can be implemented by the controller and the associated display during a single session of operation of the industrial truck, depending on the different successive current statuses of the industrial truck.

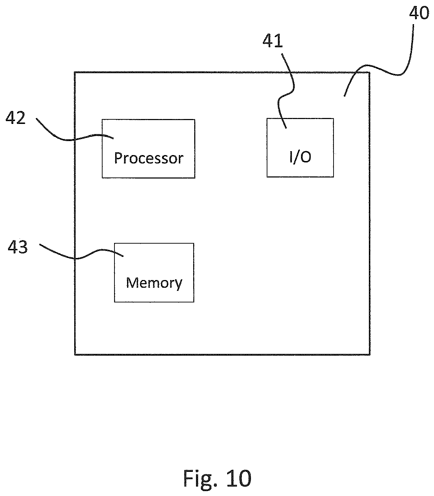

Fig. 10 shows a possible implementation of the control unit 40. In an embodiment, the control unit 40 includes a processor 42, a memory 43 and a I/O interface 41. The processor is configured to execute a control software stored on the memory 43 to execute any of the functions of the control unit 40 as above described. When executing the control software, the processor 42 generates different pieces of control information to be displayed by the display 17 as described above. Furthermore, the processor 42 outputs control signals to the display 17 of the industrial truck using the I/O interface 41 to cause the display 17 to display the control information as above described. Furthermore, when executing the control software, the processor 42 may receive as inputs the information from one or more sensors of the industrial truck by means of the I/O interface 41 and output control signals to one or more actuators of the industrial truck using the I/O interface 41 as well. Also other possible implementations of the control unit can be conceived, e.g. including a plurality of distributed processors or the like. The processing by the control unit may also be performed by a remote control board or circuit board connected to the sensors, the actuators and the display of the industrial truck via a bus, e.g. via a CAN bus. Furthermore, the display 17 may be equipped with one or more communication interfaces, such as Ethernet, BT, Can USB. Through its communication interfaces, the display may access other communication channels, such as a channel in a WI-FI network or a channel in a cellular network, or the like.

As shown above, an important achievement of the invention is increased focus of the driver by showing with one single display the most relevant information related to the current performed work, when using a forklift truck that offers load, speed, and height indication. A way to achieve this is to correlate the content of the display with the action performed by the truck. The display shows and highlights the relevant data for the current driver action to improve its working efficiency by varying the display area dedicated to a certain type of control information. The driver is not overwhelmed with information on various screens at the same time. The graphical interface changes in conjunction with the truck functions, highlighting the information that are necessary for current task, e.g.:
- energy status highlighted at truck rest,
- camera streaming automatically visualized depending on the relevant moment (handling the material at reduced visibility or driving backwards),
- when driving at low velocities, wheel orientation becomes important since the driver is driving in the narrow spaces and would like to avoid collision,
- when not driving and handling the material, material lifting or tilting information should became principal
- when collision avoidance system registers an object, driving forward or backward, the display can highlight that information.

The above description of embodiments applying the innovative principles of the invention is provided solely for the purpose of illustrating said principles and must thus not be considered as limiting the scope of the invention claimed herein.

As further optional features, all pieces of control information are shown on the display 17 in colors to improve the information differentiation on the screen. Other types of information that can be displayed including fuel level, rpm, warnings, stability related indication, state of the truck, instant energy consumption (remaining operating time), camera streaming with overlayers, etc.

Furthermore, the display 17 has advantageously a wide viewing angle, e.g. an IPS type, that contributes to the better visibility of the shown information. In addition, the display 17 is placed in an ergonomic position on the armrest 16, at a suitable visible angle of the driver's view, which reduces the tension in the neck muscles. In other words, by combining the feature that the display 17 is a wide-viewing-angle display and the feature that the display 17 is mounted on the end of the armrest 16, ergonomics is improved and the tension on the user's neck muscles are reduced. In this variation, the display 17 may be a touch screen, to ease the input by the user's hand on the arm rest.

According to a further embodiment, it is possible to signal control information to the driver by means of acoustic sounds and/or vibrations, beside images. The means for generating acoustic sounds and/or vibrations might be hosted by the display itself or remoted into some other device connected to the display.

In a further embodiment, in parallel to or simultaneously with the control information whose display area can be varied, also other control information can be shown in a fixed display area by the display. Such information shown in a fixed display area may include SPH, parking brake, turtle, hour meters, warning symbols or error symbols or the like.

The control information displayed by the display according to the present invention may include also other types of information. For example, the displayed control information may include one or more messages from a remote station. The remote station and the control unit of the industrial truck may be configured to establish a wireless connection to exchange control information. Alternatively, the display may establish a wireless connection to a remote station to exchange control information. The messages received from the remote station may relate to the motion state of the industrial truck.

## Claims

1. An industrial truck (10) including:
- a chassis (11),
- a mast (12) pivotally mounted on the chassis,
- a lifting element (13) for lifting a load (14), the lifting element being mounted on the mast in a slidable manner along the mast,
- a display (17),
- a controller (40) configured to generate a plurality of pieces of control information of different types, and to control the display to display one or more of the generated pieces of control information,
wherein the plurality of pieces of control information includes at least:
- material handling information (21, 22, 31, 32, 34, 35) relating to the handling of the load by the lifting element including one or more among a height of the lifting element (22), a load weight on the lifting element (21, 31), and a mast tilt angle (21, 32),
- movement information (19, 20, 26, 33, 36) relating to the movement of the industrial truck including one or more among the speed of the industrial truck (19), an indication of the trajectory of the industrial truck (20), and the driving direction (20),
wherein the controller is configured to control the display to vary a display area of at least one of the material handling information and the movement information based on a current status of the industrial truck,
wherein the controller (40) is configured to control the display (17) to display simultaneously the material handling information (21, 22) and the movement information (19, 20) before and after varying the display area of one of the material handling information and the movement information based on the current status of the industrial truck.

2. The industrial truck (10) according to claim 1, **characterized in that**, when the controller controls the display to enlarge the display area (28b) of one among the material handling information (21, 22) and the movement information (19, 20), the controller is configured to control the display to decrease a display area (29b) of another one among the material handling information (21, 22) and the movement information (19, 20).

3. The industrial truck (10) according to claim 1 or 2, **characterized in that** the controller (40) is configured to vary the display area of the at least one of the material handling information (21, 22) and the movement information (19, 20) from a first display area (28a) to a second display area (28b), wherein both the first and the second display areas are visible by a user of the industrial truck.

4. The industrial truck (10) according to one or more of the preceding claims, **characterized in that** the controller (40) is configured to increase a display area of the material handling information when the industrial truck is handling a load by means of the lifting element (13).

5. The industrial truck (10) according to one or more of the preceding claims, **characterized in that** the controller (40) is configured to increase a display area of the movement information when the industrial truck is moving at a speed above a predetermined threshold, the threshold being in the range 5-10 km/h.

6. The industrial truck (10) according to one or more of the preceding claims, **characterized in that** the plurality of pieces of control information further includes one or more of the following:
- battery state information (23) indicating a state of charge of a battery of the industrial truck or the residual operating time of the industrial truck,
- anti-collision information (27),
- a video (25) captured by one or more video cameras of the industrial truck.

7. The industrial truck (10) according to claim 6, **characterized in that** the controller (40) is configured to increase a display area of battery state information (23) when the industrial truck is turned off.

8. The industrial truck (10) according to one or more of claims 6-7, **characterized in that** the controller (40) is configured to increase a display area of the anti-collision information (27) when the controller detects a risk of collision.

9. The industrial truck (10) according to one or more of claims 6-8, **characterized in that** the controller (40) is configured to increase a display area of a video (25) captured by the one or more video camera when the industrial truck is driving backwards or in an environment with limited visibility.

10. The industrial truck (10) according to one or more of claims 6-9, **characterized in that** the controller (40) is configured to control the display to display simultaneously all pieces of control information before and after varying the display area of at least one of the pieces of control information based on the status of the industrial truck.

11. The industrial truck (10) according to one or more of claims 6-10, **characterized in that** the controller (40) is configured to increase a display area of information (26) relating to the inclination of steered wheels of the industrial truck, when the industrial truck is moving at a speed below a predetermined threshold.

12. The industrial truck (10) according to one or more of the preceding claims, **characterized in that** the material handling information displayed before varying the display area of the material handling information is the same as the material handling information displayed after varying the display area of the material handling information, and the movement information displayed before varying the display area of the movement information is the same as the movement information displayed after varying the display area of the movement information.
